# EUROPÄISCHE PATENTANMELDUNG

(11) **EP 1 211 501 A1**
(43) Veröffentlichungstag der Anmeldung: **05.06.2002**
(21) Anmeldenummer: 00126060.3
(22) Anmeldetag: 29.11.2000
(51) Int. Cl.: G01N 21/17

(54) **Zellkörper für optoakustische Sensoren**

(71) Anmelder: Siemens Building Technologies AG, 8034 Zürich (CH)
(72) Erfinder: Forster, Martin, Dr., 8645 Jona (CH); Alder, Rudolf, 8634 Hombrechtikon (CH)
(74) Vertreter: Dittrich, Horst, Dr.

(57) **Zusammenfassung**

Der Zellkörper (1') weist einen eine Messzelle (2) bildenden Hohlraum und ein den Hohlraum umgebende Gehäuse (3') auf. Das Gehäuse (3') besteht aus zwei Schichten (12, 13), von denen die innere (12) wärmeleitend und die äussere (13) wärmeisolierend ist. Die äussere Schicht (13) besteht aus einem Polymeren und die innere Schicht (12) besteht aus Metall.

Der Zellkörper (1') liefert bei entsprechender Wahl der Materialien für die beiden Schichten (12, 13) ein praktisch gleich grosses optoakustisches Signal wie die bisher verwendeten Zellkörper aus Aluminium, wobei jedoch die Herstellkosten gegenüber bisher massiv, um etwa 80 bis 90%, reduziert sind.

## Beschreibung

Die vorliegende Erfindung betrifft einen Zellkörper für optoakustische Sensoren, mit einem eine Messzelle bildenden Hohlraum und einem den Hohlraum umgebenden Gehäuse.
Optoakustische Sensoren werden in vielen Bereichen der Forschung und Industrie eingesetzt und dienen dazu, die Konzentration und Art einer nachzuweisenden Substanz, insbesondere eines Gases, zu bestimmen. Die Sensoren enthalten zusätzlich zum Zellkörper ein Mikrofon und, je nach Anwendung, eine gasdurchlässige Membran und eine Lichtquelle zur Aussendung einer Strahlung in den Hohlraum. Im Hohlraum wird modulierte optische Strahlungsenergie von der nachzuweisenden Substanz absorbiert und in Wärmeenergie umgewandelt. Diese Wärmeenergie erzeugt in der sich im Hohlraum befindenden Luft eine Temperaturerhöhung und diese Temperaturerhöhung erzeugt eine Druckerhöhung, die durch das Mikrofon als Schall gemessen wird. Die Druckerhöhung wird an der Wand des Zellkörpers wieder in Wärmeenergie umgewandelt und diese Wärmeenergie muss von der Gehäusewand des Zellkörpers absorbiert und abgeführt werden, damit weitere Druckerhöhungen gemessen werden können.

Der Zellkörper muss folgende, einander teilweise widersprechende Eigenschaften aufweisen:
- Mechanische Stabilität zur Eliminierung äusserer Druckschwankungen;
- gute Wärmeisolation, um den Hohlraum gegen äussere Temperaturschwankungen abzuschirmen, da diese im Hohlraum zu Druckschwankungen und damit zu Störungen des optoakustischen Signals führen können;
- gute Wärmeleitung, um die in der Druckwelle enthaltene Energie als Wärme abführen zu können;
- einfacher Aufbau, und damit verbunden, geringe Herstellkosten.
   Die bisher vorwiegend aus Metall hergestellten Zellkörper optoakustischer Sensoren stellen bezüglich Wärmeisolierung/Wärmeleitung fast immer einen Kompromiss dar und sind ausserdem relativ teuer. Zellkörper aus Polymeren sind deutlich kostengünstiger, liefern aber im allgemeinen wesentlich kleinere Signale als Zellkörper aus Metall.
   Durch die Erfindung soll nun ein Zellkörper für optoakustische Sensoren angegeben werden, der mechanisch stabil und kostengünstig herzustellen ist, und der einerseits äussere Temperaturschwankungen vom Hohlraum fern hält und andererseits die in der Druckwelle im Hohlraum enthaltene Energie rasch als Wärme abführt.

Diese Aufgabe wird erfindungsgemäss dadurch gelöst, dass das Gehäuse aus zwei Schichten besteht, von denen die innere wärmeleitend und die äussere wärmeisolierend ist.

Eine erste bevorzugte Ausführungsform des erfindungsgemässen Zellkörpers ist dadurch gekennzeichnet, dass die äussere Schicht aus einem Polymeren besteht.

Eine zweite bevorzugte Ausführungsform des erfindungsgemässen Zellkörpers ist dadurch gekennzeichnet, dass die innere Schicht aus Metall besteht.

Der erfindungsgemässe Zellkörper liefert bei entsprechender Wahl der Materialien für die beiden Schichten ein praktisch gleich grosses optoakustisches Signal wie die bisher verwendeten Zellkörper aus Aluminium, wobei jedoch die Herstellkosten gegenüber bisher massiv, um etwa 80 bis 90%, reduziert sind.

Eine dritte bevorzugte Ausführungsform des erfindungsgemässen Zellkörpers ist dadurch gekennzeichnet, dass die innere Schicht durch ein Metallröhrchen oder ein Formteil aus Metall gebildet und mit dem Polymeren umspritzt ist.

Eine vierte bevorzugte Ausführungsform des erfindungsgemässen Zellkörpers ist dadurch gekennzeichnet, dass die innere Schicht aus Metall auf den Polymeren aufgedampft oder auf diesem elektrolytisch abgeschieden ist. Vorzugsweise besteht die äussere Schicht aus mindestens zwei Teilen, welche nach dem Aufbringen der inneren Schicht zum fertigen Zellkörper zusammensetzbar sind.

Eine weitere bevorzugte Ausführungsform des erfindungsgemässen Zellkörpers ist dadurch gekennzeichnet, dass die äussere Schicht mit einer dünnen Metallschicht überzogen und dadurch eine elektromagnetische Abschirmung des Zellkörpers gebildet ist.

Im folgenden wird die Erfindung anhand eines in den Zeichnungen dargestellten Ausführungsbeispiels näher erläutert; es zeigt:
Fig. 1 einen Längsschnitt durch einen aus dem Stand der Technik bekannten Zellkörper; und
Fig. 2 einen Längsschnitt durch eine erfindungsgemässen Zellkörper.

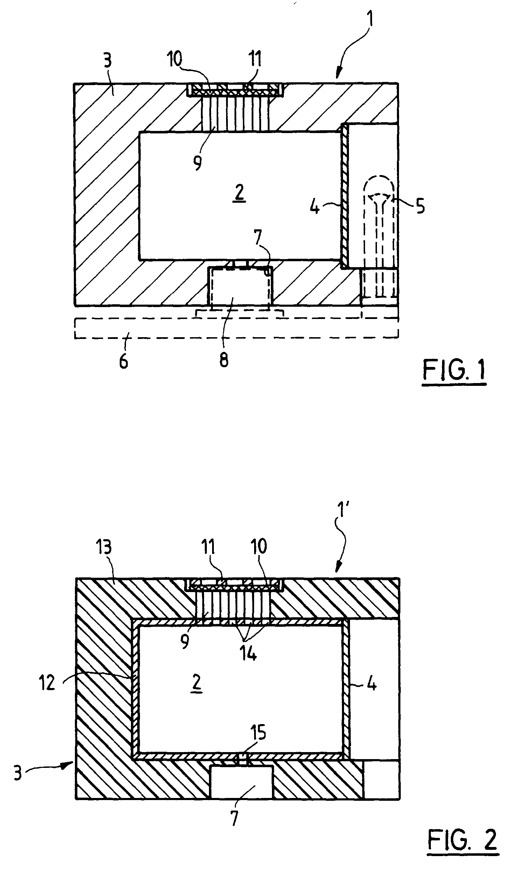

Fig. 1 zeigt einen Längsschnitt durch einen Zellkörper 1 der beispielsweise in der EP-A-0 760 474 und EP-A-0 855 592 beschriebenen Art, mit einem eine Messzelle 2 bildenden zylindrischen Hohlraum und mit einem diesen umgebenden Gehäuse 3. Das Gehäuse 3 besteht aus Aluminium oder einem ähnlichen Metall, welches gegen die Umwelt beständig ist und nicht korrodiert. Die Messzelle 2 ist bis auf die in der Figur rechte Stirnfläche allseitig vom Gehäuse 3 umgeben; die genannte Stirnfläche ist durch ein optisches Filter 4 abgeschlossen. Zwischen dem Filter 4 und dem in der Figur rechten Ende des Zellkörpers 1 ist eine Kammer gebildet, welche zur Aufnahme einer Lichtquelle 5 vorgesehen ist. Die Lichtquelle 5 ist vorzugsweise auf einer gestrichelt eingezeichneten Leiterplatte 6 montiert, die am Zellkörper 1 befestigt ist.

Das Gehäuse 3 weist unterhalb der Messzelle 2 eine mit der Messzelle über eine Bohrung verbundenen Ausnehmung 7 zur Aufnahme eines Mikrofons 8 auf, welches ebenfalls auf der Leiterplatte 6 befestigt ist. In die der Ausnehmung 7 gegenüber liegende Wand des Gehäuses 3 ist ein Lochgitter 9 eingesetzt, welches eine gaspermeable Membran 10 trägt. Die letztere ist gegen aussen durch einen mit Löchern versehenen Metalldeckel 11 in der Art eines groben Siebes abgedeckt. Die Membran 10, die für Gas durchlässig und für Wassertröpfchen undurchlässig ist, besteht aus einem engmaschigen Material mit Öffnungen in der Grössenordnung von Nanometern. Das Lochgitter 9 dient als Träger der Membran 10 und verhindert ausserdem eine direkte Bestrahlung der Membran durch die Lichtquelle 5. Die letztere ist eine herkömmliche Lampe mit einer Glühwendel, ein Silizium-Infrarot-Strahler oder eine Laserquelle. Eine auf der Leiterplatte 6 angeordnete Fotodiode (nicht dargestellt) überwacht die Intensität des von der Lichtquelle 5 ausgesandten Lichts.

Das Filter 4 wirkt als optisches Bandpassfilter mit einem für das zu detektierende Gas charakteristischen Durchlassbereich in Form eines schmalen Spektralbandes. Für den Nachweis von CO₂ liegt dieses Spektralband um 4.25 µm, für den Nachweis von CH₄ um 3.4 µm. Das Filter 4 ist mit einem das sichtbare Licht absorbierenden Klebstoff in das Gehäuse 3 eingeklebt, wobei die Absorption des sichtbaren Lichts die Beleuchtung der Messzelle 2 mit unerwünschten Wellenlängen verhindert. Durch die Absorption des sichtbaren Lichts erwärmen sich der Klebstoff und das Filter 4. Dadurch wird ein akustisches Signal verursacht, das zur Funktionskontrolle des Mikrofons 8 und der Lichtquelle 5 verwendet wird. Denn sobald dieses Signal verschwindet, ist mindestens eine dieser Komponenten nicht mehr funktionstüchtig.

Im Betriebszustand des Gassensors wird das in der Messzelle anwesende Gas, welches durch die Membran 10 und das Lochgitter 9 in die Messzelle 2 gelangt, durch moduliertes Licht der Lichtquelle 5 bestrahlt. Das Gas absorbiert die Lichtstrahlung und erwärmt sich dadurch. Daraus entsteht eine thermische Ausdehnung und, entsprechend der Modulation der Lichtstrahlung, eine periodische Druckschwankung, so dass eine akustische Druckwelle verursacht wird, deren Stärke in direktem Verhältnis zur Konzentration des Gases steht. Die gesuchte Konzentration wird durch Messung des akustischen Druckes ermittelt. Die Abhängigkeit des Messignals von den Dimensionen und weiteren Eigenschaften der Messzelle 2 und die Bestimmung der Eichkurve sind in der eingangs genannten EP-A-0 760 474 ausführlich beschrieben und werden hier nicht weiter erläutert. Es wird in diesem Zusammenhang auf die genannte europäische Patentanmeldung verwiesen.

Der Zellkörper 1 muss folgende, einander teilweise widersprechende Eigenschaften aufweisen:
- Mechanische Stabilität zur Eliminierung äusserer Druckschwankungen;
- gute Wärmeisolation, um den Hohlraum gegen äussere Temperaturschwankungen abzuschirmen, da diese im Hohlraum zu Druckschwankungen und damit zu Störungen des optoakustischen Signals führen können;
- gute Wärmeleitung, um die in der Druckwelle enthaltene Energie als Wärme abführen zu können;
- einfacher Aufbau, und damit verbunden, geringe Herstellkosten.

Die bisher verwendeten Zellkörper aus Aluminium sind zwar mechanisch stabil und gut wärmeleitend, verfügen aber über keine gute Wärmeisolation und sind in der Herstellung relativ teuer. Zellkörper aus Polymeren verfügen über eine gute Wärmeisolation und ausreichende mechanische Stabilität, sind aber schlechte Wärmeleiter. Sie liefern insbesondere wesentlich kleinere Signale als Zellkörper aus Metall und konnten sich aus diesem Grund bisher nicht durchsetzen.

In Figur 2 ist ein Zellkörper 1' dargestellt, welcher alle genannten Eigenschaften hervorragend erfüllt. Darstellungsgemäss ist das die Messzelle 2 umgebende Gehäuse 3' aus zwei Schichten aufgebaut, einer inneren die Messzelle 2 umschliessenden, wärmeleitenden Schicht 12 und einer äusseren, wärmeisolierenden Schicht 13, in welche die innere Schicht 12 eingebettet ist. Die äussere Schicht 13 besteht aus einem Polymeren, welches einfach formbar und damit sehr kostengünstig herstellbar ist. Die innere Schicht 12 besteht aus Metall und ist beispielsweise durch ein Röhrchen aus Aluminium gebildet, welches aussen mit dem Polymeren umspritzt ist.

Das Lochgitter 9 und die zur Ausnehmung 7 führende Bohrung sind im Polymeren durch Spritzen hergestellt; das die innere Schicht 12 bildende Metallröhrchen weist an seinem Mantel entsprechende Bohrungen 14 und 15 auf, welche eine Verbindung vom Inneren des Röhrchens zum Lochgitter 9 bzw. zur genannten Bohrung ermöglichen.

Die Metallschicht 12 braucht nicht durch ein Röhrchen gebildet, sondern kann auch auf andere Weise hergestellt sein. Die Dicke dieser Schicht kann 10 nm bis zu mehreren Millimetern betragen. Als Herstellungsverfahren für die Metallschicht 12 eignen sich Aufdampfen auf den Polymeren oder elektrolytisches Abscheiden auf diesem. In diesem Fall empfiehlt es sich, die äussere, polymere Schicht 13 aus zwei oder mehreren Teilen herzustellen, welche im Inneren problemlos mit einer Metallschicht belegt und anschliessend durch eine geeignete Operation, wie bei-spielsweise Kleben, Verpressen oder eine sonstige Fügeoperation zum fertigen Zellkörper 1' zusammengefügt werden.

Es kann vorteilhaft sein, die Metallschicht 12 mit einer glänzenden Oberfläche zu versehen, um durch Mehrfachreflexion der eingestrahlten optischen Strahlung der Lichtquelle 5 (Fig. 1) eine erhöhte Absorption zu erzeugen und damit die optoakustischen Signale zu vergrössern. Die dünne Metallschicht kann nicht nur innen, sondern zusätzlich auch aussen auf die wärmeisolierende Schicht 13 aufgebracht werden, wodurch man eine elektromagnetische Abschirmung des Zellkörpers 1' erhält.

Versuche haben gezeigt, dass der Zellkörper 1' mit einem in eine wärmeisolierende Schicht 13 aus Polycarbonat gesteckten Aluminiumröhrchen praktisch ein gleich grosses optoakustisches Signal liefert wie der Zellkörper 1 aus Aluminium. Wenn man das Innere der Schicht 13 aus Polycarbonat mit Aluminium bedampft, erhält man noch 61% des Signals des Zellkörpers 1. Wird die Schicht 13 in zwei Teile geteilt und innen mit 50 nm Aluminium bedampft, steigt das Signal auf 66%. Damit ist bewiesen, dass die Teilung Vorteile hat, weil eine offene Innenfläche besser bedampft werden kann als wenn in ein Loch hineingedampft werden muss. Bedampfungsversuche mit rostfreiem Stahl haben gezeigt, dass das Signal dem Wärmeleitvermögen der Schicht 12 direkt proportional ist.

Wenn der Zellkörper 1' Teil eines sogenannten Dualsensors mit einer Messzelle und einer Referenzzelle bildet (siehe dazu beispielsweise die europäische Patentanmeldung Nr. 00 121 937.7)), wobei die Mess- und die Referenzzelle nebeneinander angeordnet und von einer Lichtquelle, beispielsweise einer Infrarot-LED, mit Strahlung beaufschlagt sind, sind mit Vorteil beide Zellen in einen gemeinsamen Kunststoffblock eingespritzt.

## Patentansprüche

1. Zellkörper für optoakustische Sensoren, mit einem eine Messzelle (2) bildenden Hohlraum und einem den Hohlraum umgebenden Gehäuse (3, 3'), **dadurch gekennzeichnet, dass** das Gehäuse (3') aus zwei Schichten (12, 13) besteht, von denen die innere (12) wärmeleitend und die äussere (13) wärmeisolierend ist.

2. Zellkörper nach Anspruch 1, **dadurch gekennzeichnet, dass** die äussere Schicht (13) aus einem Polymeren besteht.

3. Zellkörper nach Anspruch 2, **dadurch gekennzeichnet, dass** die innere Schicht (12) aus Metall besteht.

4. Zellkörper nach Anspruch 3, **dadurch gekennzeichnet, dass** die innere Schicht (12) durch ein Metallröhrchen oder ein Formteil aus Metall gebildet und mit dem Polymeren umspritzt ist.

5. Zellkörper nach Anspruch 3, **dadurch gekennzeichnet, dass** die innere Schicht (12) aus Metall auf den Polymeren aufgedampft oder auf diesem elektrolytisch abgeschieden ist.

6. Zellkörper nach Anspruch 4 oder 5, **dadurch gekennzeichnet, dass** die innere Schicht (12) eine Dicke im Bereich von 10 Nanometern bis zu mehren Millimetern aufweist.

7. Zellkörper nach Anspruch 5 oder 6, **dadurch gekennzeichnet, dass** die äussere Schicht (13) aus mindestens zwei Teilen besteht, welche nach dem Aufbringen der inneren Schicht (12) zum fertigen Zellkörper (1') zusammensetzbar sind.

8. Zellkörper nach einem der Ansprüche 3 bis 7, **dadurch gekennzeichnet, dass** die innere Schicht (12) aus Aluminium besteht.

9. Zellkörper nach einem der Ansprüche 1 bis 8, **dadurch gekennzeichnet, dass** die innere Schicht (12) eine glänzende Oberfläche aufweist.

10. Zellkörper nach einem der Ansprüche 1 bis 9, **dadurch gekennzeichnet, dass** die äussere Schicht (13) mit einer dünnen Metallschicht überzogen und dadurch eine elektromagnetische Abschirmung des Zellkörpers (1') gebildet ist.

11. Zellkörper nach einem der Ansprüche 1 bis 10 für einen Dualsensor mit einer zusätzlich zur Messzelle (2) vorgesehenen Referenzzelle, **dadurch gekennzeichnet, dass** die Referenzzelle gleich aufgebaut ist wie die Messzelle (2) und mit dieser in einen gemeinsamen Kunststoffblock eingebettet ist.
